# EUROPEAN PATENT APPLICATION

(11) **EP 4 351 091 A1**
(43) Date of publication of application: **10.04.2024**
(21) Application number: 22811125.8
(22) Date of filing: 28.04.2022
(51) Int. Cl.: H04L 12/28, F24F 11/62, F24F 11/70, F24F 11/72, G05D 23/19

(54) **ZONE CONTROL SYSTEM, CONTROL DEVICE, CONTROL METHOD, AND PROGRAM**

(30) Priority: 26.05.2021 JP 2021088677
(71) Applicant: Panasonic Intellectual Property Management Co., Ltd., Kadoma-shi, Osaka 571-0057 (JP)
(72) Inventor: HIRAMATSU, Katsuhiko, Kadoma-shi, Osaka 571-0057 (JP)
(74) Representative: Appelt, Christian W.
(86) International application number: PCT/JP2022/019335
(87) International publication number: WO 2022/249851

(57) **Abstract**

A zone control system (200) includes one or more environment control devices that individually control the respective spatial environments of the zones of a space (500) and a control device (100) that determines operation parameters for the one or more environment control devices and operates the one or more environment control devices, the operation parameters each corresponding to a different one of the zones. The control device (100) calculates the matching degrees of each of candidate parameters and preference parameters, the candidate parameters being candidates for the operation parameters, the preference parameters corresponding to the individual preferences of the users of the space (500), and selects and determines, according to the matching degrees, the operation parameters for use in equalizing the number of users of each of the zones, the operation parameters being selected from among the candidate parameters.

## Description

### [Technical Field]

The present disclosure relates to a zone control system, a control device, and a control method that are used for controlling the spatial environments of the zones of a space.

### [Background Art]

In recent years, the concept of unassigned seating, where employees do not have assigned desks, has been suggested in terms of, for example, improving flexibility in working style. In such a working style, each user can select a desired zone and work in the selected zone. When selecting a zone, the user determines whether the zone meets their preference from the spatial environment of the zone. Regarding a zone selected and used by a user according to their preference, Patent Literature (PTL) 1 discloses an air conditioning control system that can provide a zone in which the setting temperature of an air conditioning device is relatively high and a zone in which the setting temperature of an air conditioning device is relatively low.

### [Citation List]

### [Patent Literature]

[PTL 1] Japanese Unexamined Patent Application Publication No. 2018-146212

### [Summary of Invention]

### [Technical Problem]

It cannot be said that the air conditioning control system disclosed in PTL 1 can properly control spatial environments in terms of efficient use of space.

In view of the above, the present disclosure aims to provide a zone control system, a control device, a control method, and a program with which spatial environments can be controlled more properly.

### [Solution to Problem]

A zone control system according to one aspect of the present disclosure includes one or more environment control devices that individually control the respective spatial environments of the zones of a space and a control device that determines operation parameters for the one or more environment control devices and operates the one or more environment control devices according to the operation parameters determined, the operation parameters each corresponding to a different one of the zones. The control device calculates the matching degrees of each of candidate parameters and preference parameters, the candidate parameters being candidates for the operation parameters, the preference parameters corresponding to the individual preferences of the users of the space, and selects and determines, according to the matching degrees calculated, the operation parameters for use in equalizing the number of users of each of the zones, the operation parameters being selected from among the candidate parameters.

A control device according to another aspect of the present disclosure is the control device described above.

A control method according to still another aspect of the present disclosure is a control method for operating one or more environment control devices that individually control the respective spatial environments of the zones of a space. The control method includes determining operation parameters for the one or more environment control devices, the operation parameters each corresponding to a different one of the zones, and operating the one or more environment control devices according to the operation parameters. In the determining of the operation parameters, the matching degrees of each of candidate parameters and preference parameters are calculated, the candidate parameters being candidates for the operation parameters, the preference parameters corresponding to the individual preferences of the users of the space, and the operation parameters for use in equalizing the number of users in each of the zones are selected and determined from among the candidate parameters according to the matching degrees.

In addition, still another aspect of the present disclosure can be embodied as a program for causing a computer to execute the above control method. Alternatively, still another aspect of the present disclosure can be embodied as a non-transitory computer-readable recording medium having recorded thereon the program.

### [Advantageous Effects of Invention]

By using the present disclosure, it is possible to control spatial environments more properly.

### [Brief Description of Drawings]

[FIG. 1A]

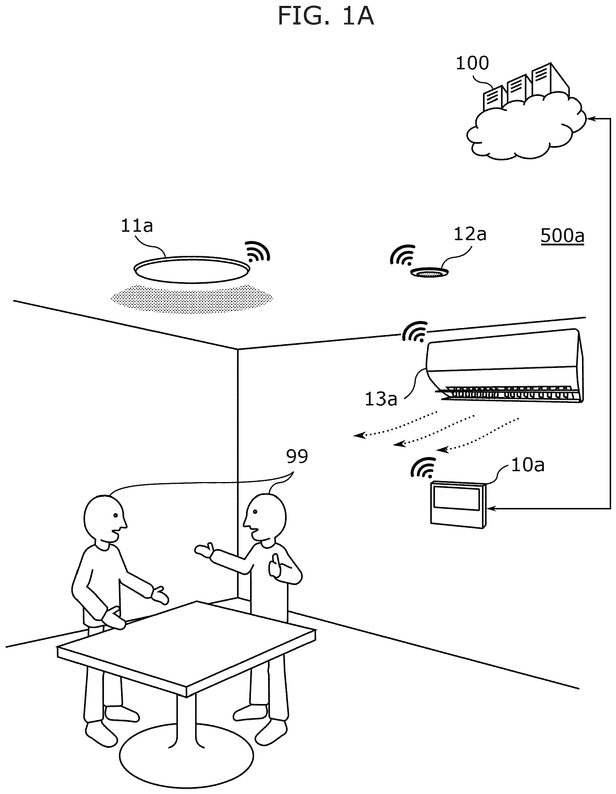

   FIG. 1A is a first overview drawing illustrating an example of use of a zone control system according to an embodiment.
[FIG. 1B]

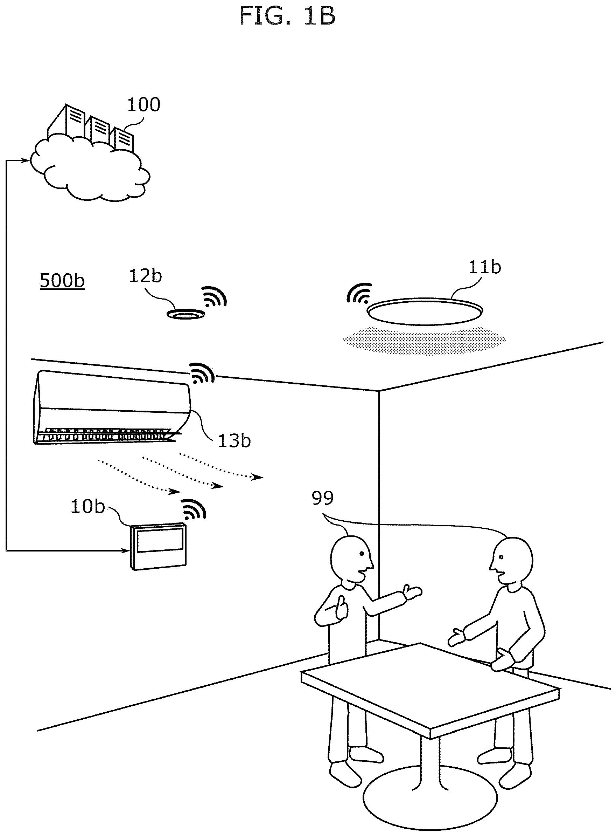

   FIG. 1B is a second overview drawing illustrating an example of use of the zone control system according to the embodiment.
[FIG. 2]

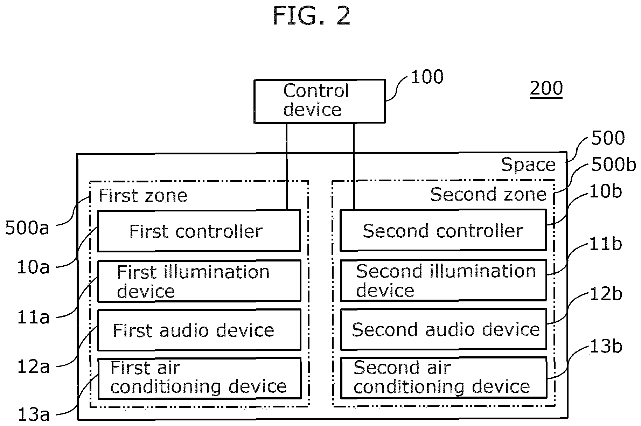

   FIG. 2 is a block diagram illustrating a functional configuration of the zone control system according to the embodiment.
[FIG. 3]

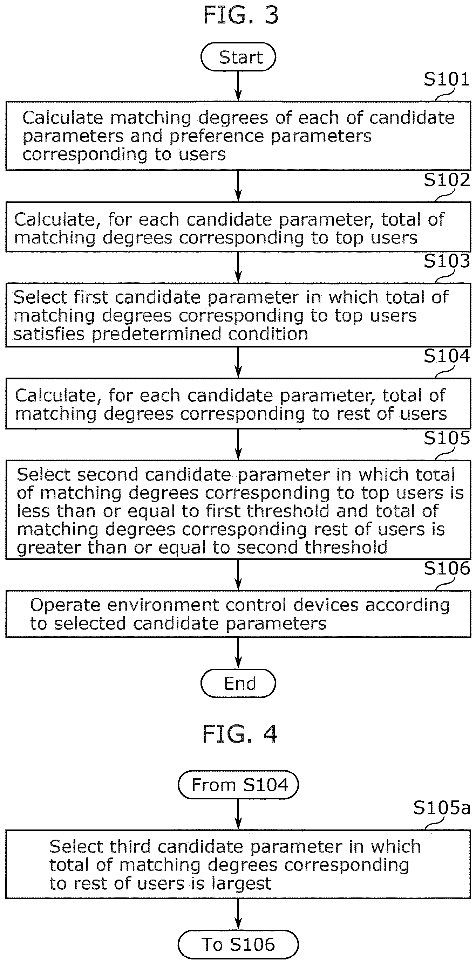

   FIG. 3 is a flowchart illustrating an example of operation of the zone control system according to the embodiment.
[FIG. 4]
   FIG. 4 is a flowchart illustrating another example of the operation of the zone control system according to the embodiment.
[FIG. 5A]

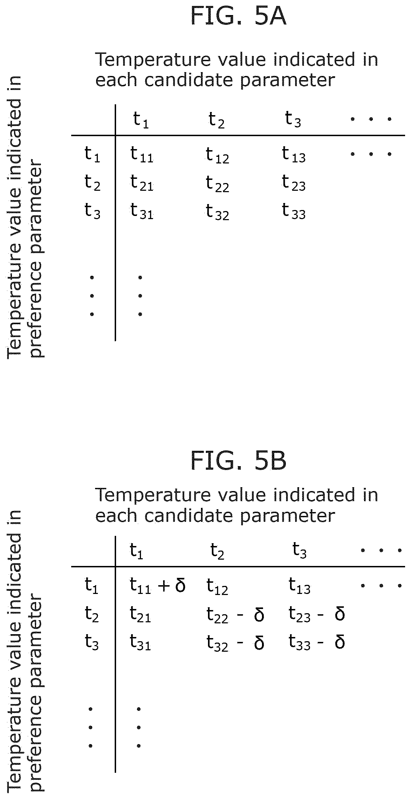

   FIG. 5A is a first figure for explaining calculation of a matching degree according to the embodiment.
[FIG. 5B]
   FIG. 5B is a second figure for explaining calculation of a matching degree according to the embodiment.
[FIG. 6]

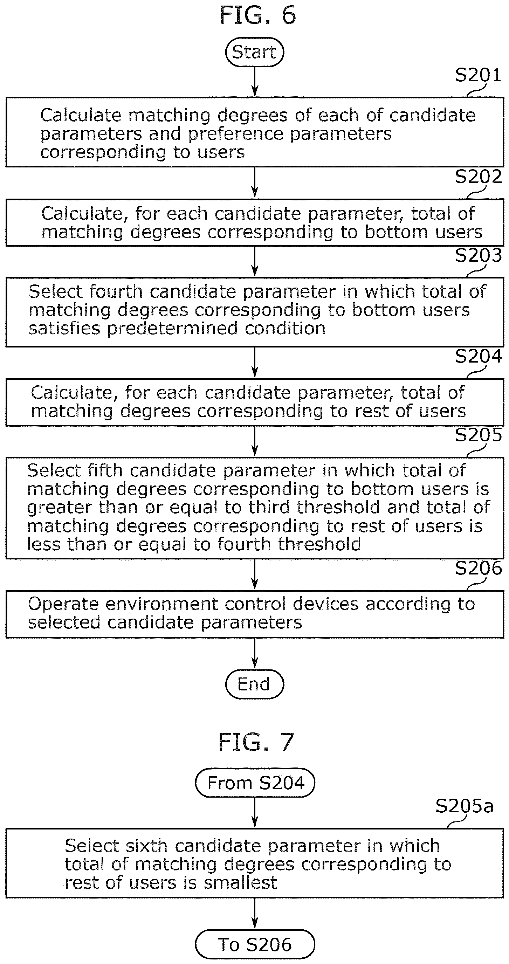

   FIG. 6 is a flowchart illustrating an example of operation of a zone control system according to a variation of the embodiment.
[FIG. 7]
   FIG. 7 is a flowchart illustrating another example of the operation of the zone control system according to the variation of the embodiment.

### [Description of Embodiments]

A zone control system, a control device, and a control method according to an embodiment of the present disclosure are described below in detail with reference to the drawings. It should be noted that the embodiment described below shows a specific example of the present disclosure. The numerical values, shapes, materials, structural elements, the arrangement and connection of the structural elements, steps, order of the steps, and other descriptions indicated in the following embodiment are mere examples, and therefore do not intend to limit the present disclosure. In addition, among the structural elements according to the embodiment, those not recited in any of the independent claims are described as optional structural elements.

The drawings are schematic views and are not necessarily precise illustrations. Thus, the scales used in the drawings are not necessarily the same. In the drawings, substantially the same structural elements are assigned the same reference symbol, and overlapping explanations are omitted or simplified.

### [Embodiment]

### [Overview]

An overview of a zone control system according to an embodiment is described with reference to FIGS. 1A and 1B. FIG. 1A is a first overview drawing illustrating an example of use of the zone control system according to the embodiment. FIG. 1B is a second overview drawing illustrating an example of use of the zone control system according to the embodiment. FIGS. 1A and 1B illustrate situations in which users 99 are using space 500 (see FIG. 2, which is described later). FIG. 1A illustrates a situation in first zone 500a of space 500. FIG. 1B illustrates a situation in second zone 500b of space 500.

In the embodiment, space 500 is divided into first zone 500a and second zone 500b, and a different spatial environment is set in each of the zones. Each user 99 selects a zone according to their preference and uses the selected zone. In the embodiment described below, space 500 includes the two zones, first zone 500a and second zone 500b. Here, two users 99 are present in each of first zone 500a and second zone 500b. In the embodiment, as illustrated in the figures, spatial environments are set so that a uniform number of users 99 are present in each zone of space 500. That is, in the embodiment, by zone control system 200 (see FIG. 2, which is described later) operating, the number of users 99 in each zone is equalized.

It should be noted that after equalization used in the present disclosure, the number of users 99 present in each zone is equal to the number of users obtained by dividing the number of users 99 of space 500 by the number of the zones of space 500. In the example in the figures, four users 99 are using space 500. Thus, in order for each of the two zones, first zone 500a and second zone 500b, to be used by a uniform number of users, two users (4 ÷ 2 = 2) should be present in each zone.

However, equalization is not limited to the case in which exactly the same number of users are in each zone. For example, in the case where the number of users 99 is less than 10, an error of around one or two persons may occur. Such an error may naturally occur since the preference of each user 99 changes with elapse of time. In another case, an error may occur when one person who becomes the remainder of dividing three users 99 by two zones uses one of the two zones. Likewise, in the embodiment, in the case where the number of users 99 is 10 or more, even if an error of around several % to 20% is seen, the number of users in each zone may be considered equalized.

In the embodiment, as an example, space 500 includes the two zones. However, space 500 may include three or more zones. A case in which space 500 includes three or more zones is described later.

As illustrated in FIG. 1A, in the embodiment, the spatial environment of first zone 500a is controlled by first illumination device 11a, first audio device 12a, and first air conditioning device 13a. First illumination device 11a, first audio device 12a, and first air conditioning device 13a are examples of environment control devices. It should be noted that only one type of environment control device may be provided. In this case, only one of first illumination device 11a, first audio device 12a, or first air conditioning device 13a may be provided.

As illustrated in FIG. 1B, in the embodiment, the spatial environment of second zone 500b is controlled by second illumination device 11b, second audio device 12b, and second air conditioning device 13b. Second illumination device 11b, second audio device 12b, and second air conditioning device 13b are examples of the environment control devices. It should be noted that only one type of environment control device may be provided. In this case, only one of second illumination device 11b, second audio device 12b, or second air conditioning device 13b may be provided.

In the embodiment, an illumination device, an audio device, and an air conditioning device are provided in each of first zone 500a and second zone 500b. However, if one device capable of controlling the spatial environments of the zones is provided, the above environment control devices need not be provided in each zone. Accordingly, even if just one environment control device is provided in space 500, the spatial environments of the zones can be controlled more properly.

In the embodiment, as an example, an illumination device, an audio device, and an air conditioning device are included as environment control devices. In addition to the above-mentioned devices, any devices, such as a ventilator, a humidifier, a perfume component generator, and an air purifier, can be used as environment control devices, as long as the devices can control one or more factors of the spatial environments of space 500.

### [Configuration]

With reference to FIG. 2 as well as FIGS. 1A and 1B, a configuration of zone control system 200 is described below. FIG. 2 is a block diagram illustrating a functional configuration of the zone control system according to the embodiment. Zone control system 200 according to the embodiment includes control device 100 and environment control devices arranged in each of the zones of space 500.

In first zone 500a, first illumination device 11a, first audio device 12a, and first air conditioning device 13a are connected to control device 100 via first controller 10a. Control device 100 is embodied as, for example, a cloud server or an edge server and can be provided in a place physically distant from space 500 or inside space 500. First controller 10a and control device 100 are communicably connected to each other via a communication line, such as the Internet. However, a connection method and a communication method are not limited to the above-mentioned methods.

First controller 10a is a device for communicably connecting control device 100 and each of first illumination device 11a, first audio device 12a, and first air conditioning device 13a. For instance, first controller 10a receives, for example, a signal from control device 100 via the communication line, and transmits the received signal to first illumination device 11a, first audio device 12a, and first air conditioning device 13a by wireless communication. In addition, first controller 10a receives signals from first illumination device 11a, first audio device 12a, and first air conditioning device 13a by wireless communication, and transmits the signals to control device 100 via the communication line. It should be noted that when each of first illumination device 11a, first audio device 12a, and first air conditioning device 13a can directly communicate with control device 100, first controller 10a does not have to be included.

Control device 100 transmits an operation parameter for operating first illumination device 11a, first audio device 12a, and first air conditioning device 13a to each of the devices via first controller 10a. Thus, each device can operate according to the operation parameter transmitted from control device 100.

First illumination device 11a controls the brightness in first zone 500a as a factor of the spatial environment of first zone 500a. First illumination device 11a is a brightness adjustable illumination device that can obtain a numerical value specifying a brightness from the received operation parameter and adjust the luminance to provide the brightness corresponding to the numerical value. It should be noted that first illumination device 11a may be a device that controls the color temperature in first zone 500a as a factor of the spatial environment of first zone 500a. In this case, first illumination device 11a obtains a numerical value specifying a color temperature from the received operation parameter and adjusts the color of light according to the color temperature corresponding to the numerical value.

First audio device 12a controls the sound in first zone 500a as a factor of the spatial environment of first zone 500a. First audio device 12a can obtain a numerical value specifying a sound volume from the received operation parameter and produce sound such as background music at the sound volume corresponding to the numeral value. It should be noted that first audio device 12a may be a device that controls the noise in first zone 500a as a factor of the spatial environment of first zone 500a. In this case, first audio device 12a is an active noise canceler that obtains a numerical value specifying a noise removal level from the received operation parameter and removes the noise at the level corresponding to the numerical value.

First air conditioning device 13a controls the temperature in first zone 500a as a factor of the spatial environment of first zone 500a. First air conditioning device 13a can obtain a numerical value specifying a temperature from the received operation parameter and cools or warms first zone 500a until the target temperature is reached, by controlling the air flow rate of a fan to cause the zone temperature to reach the temperature corresponding to the numerical value. It should be noted that first air conditioning device 13a may be a fan device that controls the volume of air flowing in first zone 500a as a factor of the spatial environment in first zone 500a. In this case, first air conditioning device 13a obtains, from the received operation parameter, a numerical value specifying the volume of air flowing in the zone and controls the fan to achieve the volume of air flowing in the zone corresponding to the numerical value.

In second zone 500b, second illumination device 11b, second audio device 12b, and second air conditioning device 13b are connected to control device 100 via second controller 10b. Second controller 10b and control device 100 are communicably connected to each other via a communication line, such as the Internet. However, a connection method and a communication method are not limited to the above-mentioned methods.

Second controller 10b is a device for communicably connecting control device 100 and each of second illumination device 11b, second audio device 12b, and second air conditioning device 13b. For instance, second controller 10b receives, for example, a signal from control device 100 via the communication line, and transmits the received signal to second illumination device 11b, second audio device 12b, and second air conditioning device 13b by wireless communication. In addition, second controller 10b receives signals from second illumination device 11b, second audio device 12b, and second air conditioning device 13b by wireless communication, and transmits the signals to control device 100 via the communication line. It should be noted that when each of second illumination device 11b, second audio device 12b, and second air conditioning device 13b can directly communicate with control device 100, second controller 10b does not have to be included.

Control device 100 transmits an operation parameter for operating second illumination device 11b, second audio device 12b, and second air conditioning device 13b to each of the devices via second controller 10b. Thus, each device can operate according to the operation parameter transmitted from control device 100.

Second illumination device 11b controls the brightness in second zone 500b as a factor of the spatial environment of second zone 500b. Second illumination device 11b is a brightness adjustable illumination device that can obtain a numerical value specifying a brightness from the received operation parameter and adjust the luminance to provide the brightness corresponding to the numerical value. It should be noted that second illumination device 11b may be a device that controls the color temperature in second zone 500b as a factor of the spatial environment of second zone 500b. In this case, second illumination device 11b obtains a numerical value specifying a color temperature from the received operation parameter and adjusts the color of light according to the color temperature corresponding to the numerical value.

Second audio device 12b controls the sound in second zone 500b as a factor of the spatial environment of second zone 500b. Second audio device 12b can obtain a numerical value specifying a sound volume from the received operation parameter and produce sound such as background music at the sound volume corresponding to the numeral value. It should be noted that second audio device 12b may be a device that controls the noise in second zone 500b as a factor of the spatial environment of second zone 500b. In this case, second audio device 12b is an active noise canceler that obtains a numerical value specifying a noise removal level from the received operation parameter and removes the noise at the level corresponding to the numerical value.

Second air conditioning device 13b controls the temperature in second zone 500b as a factor of the spatial environment of second zone 500b. Second air conditioning device 13b can obtain a numerical value specifying a temperature from the received operation parameter and cools or warms second zone 500b until the target temperature is reached, by controlling the air flow rate of a fan to cause the zone temperature to reach the temperature corresponding to the numerical value. It should be noted that second air conditioning device 13b may be a fan device that controls the volume of air flowing in second zone 500b as a factor of the spatial environment of second zone 500b. In this case, second air conditioning device 13b obtains, from the received operation parameter, a numerical value specifying the volume of air flowing in the zone and controls the fan to achieve the volume of air flowing in the zone corresponding to the numerical value.

Here, control device 100 determines the operation parameter for first zone 500a and the operation parameter for second zone 500b, as separate parameters, and transmits the operation parameters to first controller 10a and second controller 10b. Accordingly, the operation parameters that are equal in number to the zones of space 500 are determined, and each of the operation parameters is transmitted to the environment control devices provided in a corresponding one of the zones via the controller of each zone. The determined operation parameters each include numerical values specifying the operation of the illumination device, the operation of the audio device, and the operation of the air conditioning device. Thus, the operation parameters equal in number to the zones of space 500 are generated. Meanwhile, when operation parameters, each of which specifies the operation of one of the illumination device, the audio device, or the air conditioning device, are generated, one for each device, the number of the operation parameters is equal to a number obtained by multiplying the number of the zones by the number of the devices provided in each zone.

Although details are described later, the operation parameters are for equalizing the number of users 99 in each of the zones of space 500. Thus, by the environment control devices provided in each zone operating according to the corresponding operation parameter, the spatial environments of the zones become spatial environments that enable equalization of the number of users 99 in each zone.

For instance, as with PTL 1, which is recited in Background Art, if a relatively-high-temperature setting zone and a relatively-low-temperature setting zone were just provided, and if many users 99 prefer a relatively high temperature, users 99 would gather in the relatively-high-temperature setting zone. In this case, an issue arises in which the relatively-low-temperature setting zone is not efficiently used. Furthermore, some of users 99 who prefer a relatively high temperature may involuntarily use the relatively-low-temperature setting zone. In such a case, the users may not be able to satisfactorily use the space.

In the embodiment, even if each user 99 selects a zone according to their preference, each zone is used by a uniform number of users 99. Thus, proper use of space with high utilization efficiency of space 500 is achieved. Accordingly, by using zone control system 200 according to the embodiment, it is possible to control spatial environments more properly in terms of the efficient utilization of space.

### [Operation]

Operation of zone control system 200 according to the embodiment is described below with reference to FIGS. 3 and 4. FIG. 3 is a flowchart illustrating an example of operation of the zone control system according to the embodiment. FIG. 4 is a flowchart illustrating another example of the operation of the zone control system according to the embodiment.

It should be noted that the processing described below is performed prior to the operation illustrated in the flowchart. In the processing, a preference parameter corresponding to the preference of each user 99 is set by, for example, conducting a survey of users 99 of space 500, and the preference parameters for respective users 99 are stored in storage (not illustrated) or another medium. The preference parameter includes numerical values related to the factors of a spatial environment that meets the preference of user 99, the factors including the brightness provided by the illumination device, the volume of sound produced by the audio device, and the temperature controlled by the air conditioning device. It should be noted that the brightness, the sound volume, and the temperature are represented by numerical values of different scales. However, the preference parameter includes, as numerical values related to the factors of the spatial environment, standardized numerical values in which the scales of the factors are converted into a standard scale of 1 to 10 or a standard scale of 1 to 100, for example.

When users 99 of space 500 are not regular users 99, that is, when the breakdown of users 99 of space 500 at a point in time is different from the breakdown of users 99 of space 500 at another point in time, another operation to identify users 99 needs to be performed. For instance, the operation described below is performed prior to the operation illustrated in the flowchart. In the operation, at the time point at which zone control system 200 starts operating, users 99 of space 500 are identified from among all users 99 having a possibility of using space 500, and preference parameters corresponding to users 99 of space 500 are read from the storage. Users 99 may be identified by providing a gate that requires ID authentication at the entrance of space 500 and identifying using verification data or by capturing the images of users 99 of space 500 and identifying using an image recognition technique or another technique.

After performing the above operation, as illustrated in FIG. 3, control device 100 calculates the matching degrees of each of candidate parameters and the preference parameters corresponding to users 99 (S101). The candidate parameters are candidates for operation parameters and each include numerical values related to the factors of a spatial environment, such as the brightness provided by the illumination device, the volume of sound produced by the audio device, and the temperature controlled by the air conditioning device. As with the preference parameter, each of the candidate parameters includes, as the numerical values related to the factors of the spatial environment, standardized numerical values in which the scales of the factors are converted into a standardized scale of 1 to 10 or a standard scale of 1 to 100, for example. Accordingly, it is possible to directly compare a candidate parameter and a preference parameter. In addition, it is possible to directly compare the numerical values of the factors included in the candidate parameter or the preference parameter. In the embodiment, how high or low each factor included in the parameter is in comparison with a reference value set to each factor may be determined on the basis of, for example, variance from the reference value, and then the numerical values of the factors may be standardized.

As described above, the preference parameter includes numerical values indicating a brightness, a sound volume, and a temperature. That is, Pᵤ₁ denoting a preference parameter corresponding to user 99 can be represented as the vector representation of Pᵤ₁ = (Lᵤ₁, Sᵤ₁, Tᵤ₁). The candidate parameter also includes numerical values indicating a brightness, a sound volume, and a temperature. That is, P_{z1} denoting a candidate parameter can be represented as the vector representation of P_{z1} = (L_{z1}, S_{z1}, T_{z1}). Here, the matching degree of a candidate parameter and a preference parameter can be expressed as a relationship between the vectors of the parameters.

For instance, the matching degree of the candidate parameter and the preference parameter may be expressed as the inner product of the vectors. In this case, matching degree m_{u1z1} of candidate parameter P_{z1} and preference parameter Pᵤ₁ is calculated by m_{u1z1} = L_{z1}Lᵤ₁ + S_{z1}Sᵤ₁ + T_{z1}Tᵤ₁. The magnitudes of the vectors of the parameters may further be taken into consideration when calculating the matching degree of the candidate parameter and the preference parameter. That is, a numerical value, such as matching degree m_{u1z1} calculated by the above equation, may further be multiplied by, for example, a difference between the magnitude of the vector of the candidate parameter and the magnitude of the vector of the preference parameter.

In addition, control device 100 may determine a correction coefficient including a first coefficient and a second coefficient and calculate the matching degree of the candidate parameter and the preference parameter on the basis of the correction coefficient, the correction coefficient being determined according to the period in which the matching degree is calculated, the first coefficient corresponding to a factor of the spatial environment, the second coefficient corresponding to another factor of the spatial environment. For instance, in the summer (e.g., June to September) and in the winter (e.g., November to February), during which the air conditioning device has significant effects, the temperature controlled by the air conditioning device may be multiplied by a correction coefficient greater than 1. Meanwhile, in the summer and winter seasons, the brightness provided by the illumination device and the volume of sound produced by the audio device may be multiplied by a correction coefficient of 1. In addition, during the time of the day (e.g., 11 a.m. to 4 p.m.) during which outside light such as sunlight is likely to reach, the brightness provided by the illumination device may be multiplied by a correction coefficient greater than 1. Meanwhile, during the time of the day, the volume of sound produced by the audio device and the temperature controlled by the air conditioning device may be multiplied by a correction coefficient of 1.

In addition, the correction coefficient may be based on results detected by various sensors or other devices, rather than based on the period. For instance, the timing at which the air conditioning device has significant effects, as described above may be the timing at which an outdoor temperature sensor detects a temperature of 30 degrees Celsius or higher or a temperature of 10 degrees Celsius or lower.

Control device 100 may further identify a specific candidate parameter that is a candidate parameter determined as an operation parameter corresponding to a zone previously used by specific user 99 among users 99, and calculate the matching degree on the basis of numerical values included in the specific candidate parameter. An example is described below with reference to FIGS. 5A and 5B. FIG. 5A is a first figure for explaining calculation of a matching degree according to the embodiment. FIG. 5B is a second figure for explaining calculation of a matching degree according to the embodiment. FIGS. 5A and 5B illustrates the matching degree of calculated temperature values in comparison between a temperature value indicated in each preference parameter and a temperature value indicated in each candidate parameter. That is, as illustrated in FIG. 5A, when calculating the matching degree of the preference parameter including temperature value t₁ and a candidate parameter including temperature value t₁, a term indicating a temperature value (the term denoted by T_{z1}Tᵤ₁ in the above equation) is denoted by t₁₁. It should be noted that FIGS. 5A and 5B differ as to whether or not calculation of the matching degree on the basis of the numerical values included in the specific candidate parameter, which is described below, is performed.

For instance, in a case where a specific user has selected a zone in which the air conditioning device operates according to the operation parameter including temperature value t₁, the specific user tends to like temperature value t₁. Thus, by recording a zone selection history of the specific user, and making a correction in terms of the preference of user 99 when calculating a matching degree, it is possible to calculate the matching degree with high accuracy, in accordance with more observational preference of user 99. In the example, as illustrated in FIG. 5B, by setting the term denoted by t₁₁ corresponding to t₁ to t₁₁ + δ (δ > 0), the result, based on the past zone selection, indicating that the specific user tends to like t₁ can be reflected on calculation of the matching degree. In addition, as illustrated in FIG. 5B, as for the numerical values, such as t₂ and t₃, included in the candidate parameters not corresponding to the selected zone, subtraction of δ from terms indicating temperature values corresponding to t₂ and t₃ can reflect that the temperature values do not meet the preference of the specific user. It should be noted that at least one of addition or subtraction of δ may be performed.

As illustrated in FIG. 3, control device 100 totals, for each candidate parameter, matching degrees corresponding to top users (S102). The top users are users 99 ranked in top positions (that is, having high matching degrees) when the matching degrees obtained for respective users 99 with regard to each candidate parameter are arranged in descending order. The total of the matching degrees corresponding to the top users for each candidate parameter indicates how high the matching degrees corresponding to users 99 ranked in top positions are. Thus, the greater the numerical value of the total, the higher the matching degrees of the candidate parameter and the preferences of the top users. Accordingly, by selecting, as an operation parameter, a candidate parameter in which the total of matching degrees corresponding to the top users is large, the top users for the candidate parameter are likely to select the zone in which the environment control devices are operating according to the operation parameter.

Thus, in the embodiment, a first candidate parameter meeting the predetermined condition that the total of the matching degrees corresponding to the top users is relatively large is selected as one of operation parameters (S103). The first candidate parameter that meets the predetermined condition may be, for instance, a candidate parameter indicating a total value greater than a mean value (an example of a predetermined value) among the total values of the matching degrees corresponding to the top users calculated for all the candidate parameters, a candidate parameter indicating a total value greater than, for example, the third highest total value (an example of the predetermined value) in descending order of the total values of the matching degrees, or a candidate parameter indicating a total value greater than a reference total value (an example of the predetermined value) that is experimentally or empirically set. In the embodiment, a candidate parameter indicating the largest total value among the total values of the matching degrees corresponding to the top users calculated for all the candidate parameters, is selected as the first candidate parameter that meets the predetermined condition.

It should be noted that the top users may include users 99 equal in number to an equalized number of users 99 in each zone. In the embodiment, the number of the top users may be equal to the number of users obtained by dividing the number of users 99 by the number of zones. In other words, when the number of the zones is N, where N is an integer greater than or equal to 2, and when the number of users 99 is M, where M is an integer greater than or equal to N, the top M/N users out of users 99 in descending order of the matching degrees of a candidate parameter and preference parameters are the top users. In the embodiment, the number of the zones is two. Thus, when the number of users 99 is M, the top M/2 users out of users 99 in descending order of the matching degrees of the candidate parameter and the preference parameters, that is, half of users 99 are the top users. It should be noted that when M is indivisible by N, the remainder may be rounded up or down to calculate the number of the top users. In either case, a difference in the number of users may be within a range of equalization error.

The other candidate parameter comparable to the first candidate parameter is determined for the other zone of the two zones of space 500. This is described below with reference to the flowchart illustrated in FIG. 3.

The other candidate parameter is, for example, a candidate parameter for use in setting a spatial environment that is less likely to be selected by the top users for the first candidate parameter and is likely to be selected by users 99 other than the top users. Thus, as illustrated in FIG. 3, control device 100 totals, for each of all the candidate parameters, matching degrees corresponding to the rest of the users (users 99 other than the top users for the first candidate parameter) (S104). The larger the total value, the parameter may contribute to create a spatial environment that is more likely to be selected by the rest of the users. However, for such a parameter, the total value of matching degrees corresponding to the top users may also be large (that is, a spatial environment that is likely to be selected by the top users may be created).

Thus, as a second candidate parameter, control device 100 selects a candidate parameter in which the total value of matching degrees corresponding to the top users is less than or equal to a first threshold and the total value of matching degrees corresponding the rest of the users is greater than or equal to a second threshold (S105). Thus, the candidate parameter is selected in which the total value of the matching degrees corresponding to the top users is relatively small and the total value of the matching degrees corresponding to the rest of the users is relatively large. That is, by the environment control devices operating according to the second candidate parameter selected in this way, the zone controlled according to the second candidate parameter can provide a spatial environment that is less likely to be selected by the top users and is likely to be selected by the rest of the users.

It should be noted that when various conditions, which include the condition that there are a few candidate parameters in the first place, are met, if there is little possibility of the candidate parameter in which the total value of the matching degrees corresponding to the rest of the users is large being identical to the candidate parameter in which the total value of the matching degrees corresponding to the top users is large, control device 100 may operate as illustrated in the flowchart illustrated in FIG. 4. That is, control device 100 may simply select a third candidate parameter in which the total value of the matching degrees corresponding to the rest of the users is the largest (S105a).

As illustrated in FIG. 3, control device 100 determines, as the operation parameters, the selected first candidate parameter and second candidate parameter (or third candidate parameter), and transmits each operation parameter to the environment control devices provided in a corresponding one of the zones, thereby operating the environment control devices (S106).

Thus, in the embodiment, the first candidate parameter and the second candidate parameter (or the third candidate parameter) are selected and determined as described above. Accordingly, it is possible to provide the two zones of the spatial environments that are likely to be selected mutually exclusively by a group of the top users and a group of the rest of the users. The top users are likely to select the zone in which the first candidate parameter is selected and determined as the operation parameter. Meanwhile, the rest of the users are likely to select the zone in which the second candidate parameter (or the third candidate parameter) is selected and determined as the operation parameter.

The number of the top users and the number of the rest of the users are approximately the same. Thus, by the top users using one of the zones of space 500 and the rest of the users using the other zone, as described above, the number of users 99 in each zone is equalized, and proper use of space with high utilization efficiency of space 500 is achieved. Thus, by using zone control system 200 according to the embodiment, it is possible to control spatial environments more properly in terms of the efficient utilization of space.

### [Variation]

Operation of zone control system 200 according to a variation of the embodiment is described below with reference to FIGS. 6 and 7. In the variation described below, differences from zone control system 200 according to the embodiment are explained, and overlapping explanations for the same points may be omitted or simplified. Specifically, a configuration of zone control system 200 according to the variation is identical to that of zone control system 200 according to the embodiment. However, operation of zone control system 200 according to the variation differs from that of zone control system 200 according to the embodiment. Thus, the operation of zone control system 200 according to the variation is described below. FIG. 6 is a flowchart illustrating an example of operation of a zone control system according to a variation of the embodiment. FIG. 7 is a flowchart illustrating another example of the operation of the zone control system according to the variation of the embodiment.

It should be noted that the processing described below is performed prior to the operation illustrated in the flowchart. In the processing, a preference parameter corresponding to the preference of each user 99 is set by, for example, conducting a survey of users 99 of space 500, and the preference parameters for respective users 99 are stored in storage (not illustrated) or another medium.

When users 99 of space 500 are not regular users 99, that is, when the breakdown of users 99 of space 500 at a point in time is different from the breakdown of users 99 of space 500 at another point in time, another operation to identify users 99 needs to be performed prior to the operation illustrated in the flowchart.

After performing the above operation, as illustrated in FIG. 6, control device 100 calculates the matching degrees of each of candidate parameters and the preference parameters corresponding to users 99 (S201).

As described above, also in the variation, for instance, the matching degree of a candidate parameter and a preference parameter may be expressed as the inner product of vectors. The magnitudes of the vectors of the parameters may further be taken into consideration when calculating the matching degree of the candidate parameter and the preference parameter. That is, a calculated numerical value may further be multiplied by, for example, a difference between the magnitude of the vector of the candidate parameter and the magnitude of the vector of the preference parameter.

Control device 100 may further determine a correction coefficient including a first coefficient and a second coefficient and calculate the matching degree of the candidate parameter and the preference parameter on the basis of the correction coefficient, the correction coefficient being determined according to the period in which the matching degree is calculated, the first coefficient corresponding to a factor of a spatial environment, the second coefficient corresponding to another factor of the spatial environment.

Control device 100 may further identify a specific candidate parameter that is a candidate parameter determined as an operation parameter corresponding to a zone previously used by a specific user among users 99, and calculate the matching degree on the basis of numerical values included in the specific candidate parameter. Control device 100 totals, for each candidate parameter, matching degrees corresponding to bottom users (S202). The bottom users are users 99 ranked in bottom positions (that is, having low matching degrees) when the matching degrees obtained for respective users 99 with regard to each candidate parameter are arranged in ascending order. The total of the matching degrees corresponding to the bottom users for each candidate parameter indicates how low the matching degrees corresponding to users 99 ranked in bottom positions are. The smaller the numerical value of the total, the lower the matching degrees of the candidate parameter and the preferences of the bottom users. Accordingly, by selecting, as an operation parameter, a candidate parameter in which the total of matching degrees corresponding to the bottom users is small, the bottom users for the candidate parameter are less likely to select the zone in which environment control devices are operating according to the operation parameter.

Thus, in the variation of the embodiment, a fourth candidate parameter meeting the predetermined condition that the total of the matching degrees corresponding to the bottom users is relatively small is selected as one of operation parameters (S203). The fourth candidate parameter that meets the predetermined condition may be, for instance, a candidate parameter indicating a total value lower than a mean value (an example of a predetermined value) among the total values of the matching degrees corresponding to the bottom users calculated for all the candidate parameters, a candidate parameter indicating a total value lower than, for example, the third lowest total value (an example of the predetermined value) in ascending order of the total values of the matching degrees, or a candidate parameter indicating a total value lower than a reference total value (an example of the predetermined value) that is experimentally or empirically set. In the variation of the embodiment, the candidate parameter in which the total value of the matching degrees is the smallest among the total values of the matching degrees corresponding to the bottom users calculated for all the candidate parameters, is selected as the fourth candidate parameter that meets the predetermined condition.

It should be noted that the bottom users may include users 99 equal in number to an equalized number of users 99 in each zone. In the variation of the embodiment, the number of the bottom users may be equal to the number of users obtained by dividing the number of users 99 by the number of zones. In other words, when the number of the zones is N, where N is an integer greater than or equal to 2, and when the number of users 99 is M, where M is an integer greater than or equal to N, the bottom M/N users out of users 99 in ascending order of the matching degrees of a candidate parameter and preference parameters are bottom users. In the variation of the embodiment, the number of the zones is two. Thus, when the number of users 99 is M, the bottom M/2 users out of users 99 in ascending order of the matching degrees of the candidate parameter and the preference parameters, that is, half of users 99 are the bottom users. It should be noted that when M is indivisible by N, the remainder may be rounded up or down to calculate the number of the bottom users. In either case, a difference in the number of users is within a range of equalization error.

The other candidate parameter comparable to the fourth candidate parameter is determined for the other zone of the two zones of space 500. This is described below with reference to the flowchart illustrated in FIG. 6.

The other candidate parameter is, for example, a candidate parameter for use in setting a spatial environment that is likely to be selected by the bottom users for the fourth candidate parameter and is less likely to be selected by users 99 other than the bottom users. Thus, as illustrated in FIG. 6, control device 100 totals, for each of all the candidate parameters, matching degrees corresponding to the rest of the users (users 99 other than the bottom users for the fourth candidate parameter) (S204). The smaller the total value, the parameter may contribute to create a spatial environment that is less likely to be selected by the rest of the users. However, for such a parameter, the total value of matching degrees corresponding to the bottom users may also be small (that is, a spatial environment that is less likely to be selected by the bottom users may be created).

Thus, as a fifth candidate parameter, control device 100 selects a candidate parameter in which the total value of matching degrees corresponding to the bottom users is greater than or equal to a third threshold and the total value of matching degrees corresponding the rest of the users is less than or equal to a fourth threshold (S205). Thus, a candidate parameter is selected in which the total value of the matching degrees corresponding to the bottom users is relatively large and the total value of the matching degrees corresponding to the rest of the users is relatively small. That is, by environment control devices operating according to the fifth candidate parameter selected in this way, the zone controlled according to the fifth candidate parameter can provide a spatial environment that is likely to be selected by the bottom users and is less likely to be selected by the rest of the users.

It should be noted that when various conditions, such as the condition that there are a few candidate parameters in the first place, are met, if there is little possibility of the candidate parameter in which the total value of the matching degrees corresponding to the rest of the users is small being identical to the candidate parameter in which the total value of the matching degrees corresponding to the bottom users is small, control device 100 may operate as illustrated in the flowchart illustrated in FIG. 7. That is, control device 100 may simply select a sixth candidate parameter in which the total value of the matching degrees corresponding to the rest of the users is the smallest (S205a).

As illustrated in FIG. 6, control device 100 determines, as the operation parameters, the selected fourth candidate parameter and fifth candidate parameter (or sixth candidate parameter), and transmits each operation parameter to the environment control devices provided in a corresponding one of the zones, thereby operating the environment control devices (S206).

Thus, in the variation of the embodiment, the fourth candidate parameter and the fifth candidate parameter (or the sixth candidate parameter) are selected and determined as described above. Accordingly, it is possible to provide the two zones of the spatial environments that are likely to be selected mutually exclusively by a group of the bottom users and a group pf the rest of the users. The bottom users are likely to select the zone in which the fifth candidate parameter (or the sixth candidate parameter) is selected and determined as the operation parameter. Meanwhile, the rest of the users are likely to select the zone in which the fourth candidate parameter is selected and determined as the operation parameter.

The number of the bottom users and the number of the rest of the users are approximately the same. Thus, by the bottom users using one of the zones of space 500 and the rest of the users using the other zone, as described above, the number of users 99 in each zone is equalized, and proper use of space with high utilization efficiency of space 500 is achieved. Thus, by using zone control system 200 according to the variation of the embodiment, it is possible to control spatial environments more properly in terms of the efficient utilization of space.

### [Advantageous Effects]

As described above, zone control system 200 according to the embodiment includes one or more environment control devices that individually control the respective spatial environments of the zones of space 500 and control device 100 that determines operation parameters for the one or more environment control devices and operates the one or more environment control devices according to the operation parameters determined, the operation parameters each corresponding to a different one of the zones. Control device 100 calculates the matching degrees of each of candidate parameters and preference parameters, the candidate parameters being candidates for the operation parameters, the preference parameters corresponding to the individual preferences of users 99 of space 500, and selects and determines, according to the matching degrees calculated, the operation parameters for use in equalizing the number of users 99 of each of the zones, the operation parameters being selected from among the candidate parameters.

According to the preference parameters corresponding to users 99, zone control system 200 described above can select, from among the candidate parameters, the operation parameters for use in equalizing the number of users 99 in each zone. As a result, each zone of the space is used by an equalized number of users 99. Thus, zone control system 200 can control the spatial environments more properly in terms of the efficient utilization of space.

For instance, when the number of the zones is N, where N is an integer greater than or equal to 2, and when the number of users 99 is M, where M is an integer greater than or equal to N, control device 100 may select and determine a first candidate parameter as one of the operation parameters from among the candidate parameters, the first candidate parameter being a candidate parameter in which the total of matching degrees corresponding to top M/N users out of users 99 in descending order of matching degrees of the first candidate parameter and the preference parameters is greater than or equal to a predetermined value.

Thus, the first candidate parameter can be selected for one of the zones as the operation parameter for use in providing the zone with a spatial environment that is likely to be used by M/N users equal in number to the number of users obtained by dividing the number of users 99 (M) of space 500 by the number of the zones (N).

For instance, when the number of the zones is N, where N is an integer greater than or equal to 2, and when the number of users 99 is M, where M is an integer greater than or equal to N, control device 100 may select and determine a first candidate parameter as one of the operation parameters from among the candidate parameters, the first candidate parameter being a candidate parameter in which the total of matching degrees corresponding to top M/N users out of users 99 in descending order of matching degrees of the first candidate parameter and the preference parameters is the largest.

Thus, the first candidate parameter can be selected for one of the zones as the operation parameter for use in providing the zone with a spatial environment that is likely to be used by M/N users equal in number to the number of users obtained by dividing the number of users 99 (M) of space 500 by the number of the zones (N).

For instance, control device 100 may further select and determine a second candidate parameter as another operation parameter out of the operation parameters from among the candidate parameters, the second candidate parameter being a candidate parameter in which the total of matching degrees of the second candidate parameter and preference parameters corresponding to the top M/N users is less than or equal to a first threshold, the top M/N users being the top M/N users out of users 99 in the descending order of the matching degrees of the first candidate parameter and the preference parameters.

Thus, the second candidate parameter can be selected as another operation parameter (that is, an operation parameter for another zone), the second candidate parameter being a parameter selected for another zone that is less likely to be used by the top M/N users who are likely to use the zone in which the first candidate parameter is selected as the operation parameter. This decreases the possibility of the top users, who are likely to use the zone in which the first candidate parameter is selected as the operation parameter, using another zone in which the second candidate parameter is selected as the operation parameter. Accordingly, another zone is likely to be used by the rest of the users, that is, the users other than the top users.

For instance, control device 100 may further select and determine a second candidate parameter as another operation parameter out of the operation parameters from among the candidate parameters, the second candidate parameter being a candidate parameter in which the total of matching degrees corresponding to top M/N users out of rest of the users in descending order of matching degrees of the second candidate parameter and preference parameters corresponding to the rest of the users is greater than or equal to a second threshold, the rest of the users being users other than the top M/N users out of users 99 in the descending order of the matching degrees of the first candidate parameter and the preference parameters.

Thus, the second candidate parameter can be selected as another operation parameter (that is, an operation parameter for another zone), the second candidate parameter being a parameter selected for another zone that is likely to be used by M/N users 99 out of the rest of the users, the rest of the users being the users other than the top M/N users who are likely to use the zone in which the first candidate parameter is selected as the operation parameter. M/N users 99 out of the users other than the top users are likely to use another zone.

For instance, control device 100 may further select and determine a third candidate parameter as another operation parameter out of the operation parameters from among the candidate parameters, the third candidate parameter being a candidate parameter in which the total of matching degrees corresponding to top M/N users out of rest of the users in descending order of matching degrees of the third candidate parameter and preference parameters corresponding to the rest of the users is the largest, the rest of the users being users other than the top M/N users out of users 99 in the descending order of the matching degrees of the first candidate parameter and the preference parameters.

Thus, a third candidate parameter can be selected as another operation parameter (that is, an operation parameter for another zone), the third candidate parameter being a parameter selected for another zone that is likely to be used by M/N users 99 out of the rest of the users, the rest of the users being the users other than the top M/N users who are likely to use the zone in which the first candidate parameter is selected as the operation parameter. M/N users 99 out of the users other than the top users are likely to use another zone.

For instance, when the number of the zones is N, where N is an integer greater than or equal to 2, and when the number of users 99 is M, where M is an integer greater than or equal to N, control device 100 may select and determine a fourth candidate parameter as one of the operation parameters from among the candidate parameters, the fourth candidate parameter being a candidate parameter in which the total of matching degrees corresponding to bottom M/N users out of users 99 in the ascending order of the matching degrees of the fourth candidate parameter and the preference parameters is less than or equal to a predetermined value.

Thus, the fourth candidate parameter can be selected for one of the zones as an operation parameter for use in providing the zone with a spatial environment that is less likely to be used by M/N users 99, M/N indicating a number obtained by dividing the number of users 99 (M) of space 500 by the number of zones (N). Accordingly, the zone in which the fourth candidate parameter is selected as the operation parameter is likely to be used by the users other than M/N users 99 who are less likely to use the zone.

For instance, when the number of the zones is N, where N is an integer greater than or equal to 2, and when the number of users 99 is M, where M is an integer greater than or equal to N, control device 100 may select and determine a fourth candidate parameter as one of the operation parameters from among the candidate parameters, the fourth candidate parameter being a candidate parameter in which the total of matching degrees corresponding to bottom M/N users out of users 99 in the ascending order of the matching degrees of the fourth candidate parameter and the preference parameters is the smallest.

Thus, the fourth candidate parameter can be selected for one of the zones as an operation parameter for use in providing the zone with a spatial environment of that is less likely to be used by M/N users 99, M/N indicating a number obtained by dividing the number of users 99 (M) of space 500 by the number of zones (N). Accordingly, the zone in which the fourth candidate parameter is selected as the operation parameter is likely to be used by the users other than M/N users 99 who are less likely to use the zone.

For instance, control device 100 may further select and determine a fifth candidate parameter as another operation parameter out of the operation parameters from among the candidate parameters, the fifth candidate parameter being a candidate parameter in which the total of matching degrees of the fifth candidate parameter and preference parameters corresponding to bottom M/N or less users is greater than or equal to a third threshold, the bottom M/N or less users being bottom M/N or less users out of users 99 in ascending order of matching degrees of the fourth candidate parameter and the preference parameters.

Accordingly, the fifth candidate parameter can be selected as another operation parameter (that is, an operation parameter for another zone), the fifth candidate parameter being a parameter selected for another zone that is likely to be used by the bottom M/N users who are less likely to use the zone in which the fourth candidate parameter is selected as the operation parameter. This increases the possibility of the bottom users, who are less likely to use the zone in which the fourth candidate parameter is selected as the operation parameter, using another zone in which the fifth candidate parameter is selected as the operation parameter. Accordingly, another zone is likely to be used by the bottom users.

For instance, control device 100 may further select and determine a fifth candidate parameter as another operation parameter out of the operation parameters from among the candidate parameters, the fifth candidate parameter being a candidate parameter in which the total of matching degrees corresponding to bottom M/N users out of rest of the users in ascending order of matching degrees of the fifth candidate parameter and preference parameters corresponding to the rest of the users is less than or equal to a fourth threshold, the rest of the users being users other than bottom M/N or less users out of users 99 in ascending order of matching degrees of the fourth candidate parameter and the preference parameters.

Thus, the fifth candidate parameter can be selected as another operation parameter (that is, an operation parameter for another zone), the fifth candidate parameter being a parameter selected for another zone that is likely to be used by M/N users 99 out of the rest of the users, the rest of the users being the users other than the bottom M/N users who are less likely to use the zone in which the fourth candidate parameter is selected as the operation parameter. It is possible to create a zone that is less likely to be used also by M/N users 99 out of the users other than the bottom users. The zone is likely to be used by the users other than M/N users 99 that follow the bottom M/N users. It should be noted that the users other than M/N users 99 that follow the bottom users include the bottom users.

For instance, control device 100 may further select and determine a sixth candidate parameter as another operation parameter out of the operation parameters from among the candidate parameters, the sixth candidate parameter being a candidate parameter in which the total of matching degrees corresponding to bottom M/N users out of rest of the users in ascending order of matching degrees of the sixth candidate parameter and preference parameters corresponding to the rest of the users is the smallest, the rest of the users being users other than bottom M/N or less users out of users 99 in ascending order of matching degrees of the fourth candidate parameter and the preference parameters.

Thus, the sixth candidate parameter can be selected as another operation parameter (that is, an operation parameter for another zone), the sixth candidate parameter being a parameter selected for another zone that is likely to be used by M/N users 99 out of the rest of the users, the rest of the users being the users other than the bottom M/N users who are less likely to use the zone in which the fourth candidate parameter is selected as the operation parameter. It is possible to create a zone that is less likely to be used also by M/N users 99 out of the users other than the bottom users. The zone is likely to be used by the users other than M/N users 99 that follow the bottom M/N users. It should be noted that the users other than M/N users 99 that follow the bottom users include the bottom users.

For instance, each of the candidate parameters may include a first value corresponding to a first factor of a spatial environment and a second value corresponding to a second factor of the spatial environment. Each of the preference parameters corresponding to users 99 may include a third value corresponding to the first factor of the spatial environment and a fourth value corresponding to the second factor of the spatial environment. Control device 100 may calculate the matching degree of the candidate parameter and the preference parameter, by adding the product of the first value and the third value and the product of the second value and the fourth value.

Thus, it is possible to calculate the matching degree of the candidate parameter and the preference parameter, by adding the product of the first value and the third value and the product of the second value and the fourth value.

For instance, control device 100 may further determine a correction coefficient according to the period in which the matching degree of the candidate parameter and the preference parameter is calculated, the correction coefficient including a first coefficient corresponding to the first factor of the spatial environment and a second coefficient corresponding to the second factor of the spatial environment, and calculate the matching degree of the candidate parameter and the preference parameter by adding the product of the first coefficient, the first value, and the third value and the product of the second coefficient, the second value, and the fourth value.

Thus, it is possible to calculate the matching degree of the candidate parameter and the preference parameter in consideration of the correction coefficient determined according to the period, by adding the product of the first coefficient, the first value, and the third value and the product of the second coefficient, the second value, and the fourth value.

For instance, control device 100 may further identify a specific candidate parameter that is a candidate parameter determined as an operation parameter corresponding to a zone previously used by a specific user, and when the control device calculates the matching degrees of each of the candidate parameters and a preference parameter corresponding to the specific user, the matching degree of the specific candidate parameter and the preference parameter corresponding to the specific user may be calculated higher than the matching degree of another candidate parameter and the preference parameter corresponding to the specific user.

Thus, it is possible to calculate the matching degree of the candidate parameter and the preference parameter in consideration of the history of zones previously used by the user.

In addition, control device 100 according to the embodiment is control device 100 included in zone control system 200 described above.

By operating the environment control devices, control device 100 can provide advantageous effects similar to those of zone control system 200 described above.

In addition, the control method according to the embodiment is a control method for operating one or more environment control devices that individually control the respective spatial environments of the zones of space 500. The control method includes determining operation parameters for the one or more environment control devices, the operation parameters each corresponding to a different one of the zones, and operating the one or more environment control devices according to the operation parameters. In the determining of the operation parameters, the matching degrees of each of candidate parameters and preference parameters are calculated, the candidate parameters being candidates for the operation parameters, the preference parameters corresponding to the individual preferences of users 99 of space 500, and the operation parameters for use in equalizing the number of users 99 in each of the zones are selected and determined from among the candidate parameters according to the matching degrees.

The control method can provide advantageous effects similar to those of zone control system 200 described above.

In addition, a program according to the embodiment is a program for causing a computer to execute the above-mentioned control method.

By causing the computer to run the program, it is possible to execute the above-mentioned control method, and thus the program can provide advantageous effects similar to those of zone control system 200 described above.

### [Other Embodiments]

The zone control system, the control method, the control method, and the program according to the present disclosure are described above on the basis of the embodiment. However, the present disclosure is not limited to the embodiment.

In the embodiment, processing performed by a specific processor may be performed by another processor. The order in which processing tasks are performed may be changed, or processing tasks may be performed in parallel. The assignment of the structural elements of the zone control system to the devices is a mere example. For instance, a structural element of one device may be assigned to another device.

The processing described in the above embodiment may be achieved by performing centralized processing with the use of a single device (system) or by performing distributed processing with the use of multiple devices. The processor that executes the above program may be a single processor or multiple processors. That is, centralized processing or distributed processing may be performed.

In the embodiment, the zone control system is used in the space including the two zones. However, for instance, the zone control system may be used in a space including three or more zones. In this case, after top M/N users in descending order of matching degrees are determined as top users, the top M/N users out of the rest of the users (that is, the next top M/N users) in descending order of matching degrees may be determined as the next top users. Then, groups each including M/N users may be formed successively in descending order of matching degrees.

In the embodiment, after the first candidate parameter for top users is selected, the second candidate parameter is selected under that condition that the second candidate parameter is likely to be selected by the rest of the users. However, when the preferences of the users are further simplified, a candidate parameter in which the total value of matching degrees corresponding to top users is the largest and a candidate parameter in which the total value is the second largest may be simply selected.

In the embodiment, all or some of the structural elements, such as the controller, may be dedicated hardware or may be caused to function by executing a software program suitable for each structural element. Each structural element may be caused to function by a program executer, such as a central processing unit (CPU) or a processor, reading and executing a software program stored in a recording medium, such as an HDD or semiconductor memory.

In addition, a structural element such as a controller may be one electronic circuit or two or more electronic circuits. The one electronic circuit or each of the two or more electronic circuits may be a general-purpose circuit or a dedicated circuit.

The one electronic circuit or two or more electronic circuits may include, for example, a semiconductor device, an IC, or an LSI. The IC or LSI may be integrated into one chip or multiple chips. Here, an integrated circuit is referred to as an IC or an LSI. However, according to the level of integration, an integrated circuit may be referred to as a system LSI, a very large-scale integration (VLSI), or an ultra-large-scale integration (ULSI). A FPGA programed after manufacturing an LSI can be used for the same purpose.

In addition, a general or specific aspect of the present disclosure may be embodied as a system, a device, a method, an integrated circuit, or a computer program. Alternatively, a general or specific aspect of the present disclosure may be embodied as a non-transitory computer-readable recording medium in which the computer program is stored, such as an optical disk, an HDD, or semiconductor memory. A general or specific aspect of the present disclosure may be achieved in any combination of the system, the device, the method, the integrated circuit, the computer program, and the recording medium.

It should be noted that the present disclosure includes one or more embodiments obtained by making various changes conceived by those skilled in the art to the embodiment and one or more embodiments obtained through any combination of the structural elements and the functions according to the embodiment within the scope of the present disclosure.

### [Reference Signs List]

- 11a: first illumination device (environment control device)
- 11b: second illumination device (environment control device)
- 12a: first audio device (environment control device)
- 12b: second audio device (environment control device)
- 13a: first air conditioning device (environment control device)
- 13b: second air conditioning device (environment control device)
- 99: user
- 100: control device
- 200: zone control system
- 500: space

## Claims

1. A zone control system comprising:
one or more environment control devices that individually control respective spatial environments of a plurality of zones of a space; and
a control device that determines operation parameters for the one or more environment control devices and operates the one or more environment control devices according to the operation parameters determined, the operation parameters each corresponding to a different one of the plurality of zones,
wherein the control device
calculates matching degrees of each of candidate parameters and preference parameters, the candidate parameters being candidates for the operation parameters, the preference parameters corresponding to individual preferences of users of the space, and
selects and determines, according to the matching degrees calculated, the operation parameters for use in equalizing a total number of users of each of the plurality of zones, the operation parameters being selected from among the candidate parameters.

2. The zone control system according to claim 1,
wherein when a total number of the plurality of zones is N, where N is an integer greater than or equal to 2, and when a total number of the users is M, where M is an integer greater than or equal to N, the control device selects and determines a first candidate parameter as one of the operation parameters from among the candidate parameters, the first candidate parameter being a candidate parameter in which a total of matching degrees corresponding to top M/N users out of the users in descending order of matching degrees of the first candidate parameter and the preference parameters is greater than or equal to a predetermined value.

3. The zone control system according to claim 1,
wherein when a total number of the plurality of zones is N, where N is an integer greater than or equal to 2, and when a total number of the users is M, where M is an integer greater than or equal to N, the control device selects and determines a first candidate parameter as one of the operation parameters from among the candidate parameters, the first candidate parameter being a candidate parameter in which a total of matching degrees corresponding to top M/N users out of the users in descending order of matching degrees of the first candidate parameter and the preference parameters is largest.

4. The zone control system according to claim 2 or 3,
wherein the control device further selects and determines a second candidate parameter as another operation parameter out of the operation parameters from among the candidate parameters, the second candidate parameter being a candidate parameter in which a total of matching degrees of the second candidate parameter and preference parameters corresponding to the top M/N users is less than or equal to a first threshold, the top M/N users being the top M/N users out of the users in the descending order of the matching degrees of the first candidate parameter and the preference parameters.

5. The zone control system according to any one of claims 2 to 4,
wherein the control device further selects and determines a second candidate parameter as another operation parameter out of the operation parameters from among the candidate parameters, the second candidate parameter being a candidate parameter in which a total of matching degrees corresponding to top M/N users out of rest of the users in descending order of matching degrees of the second candidate parameter and preference parameters corresponding to the rest of the users is greater than or equal to a second threshold, the rest of the users being users other than the top M/N users out of the users in the descending order of the matching degrees of the first candidate parameter and the preference parameters.

6. The zone control system according to claim 2 or 3,
wherein the control device further selects and determines a third candidate parameter as another operation parameter out of the operation parameters from among the candidate parameters, the third candidate parameter being a candidate parameter in which a total of matching degrees corresponding to top M/N users out of rest of the users in descending order of matching degrees of the third candidate parameter and preference parameters corresponding to the rest of the users is largest, the rest of the users being users other than the top M/N users out of the users in the descending order of the matching degrees of the first candidate parameter and the preference parameters.

7. The zone control system according to claim 1,
wherein when a total number of the plurality of zones is N, where N is an integer greater than or equal to 2, and when a total number of the users is M, where M is an integer greater than or equal to N, the control device selects and determines a fourth candidate parameter as one of the operation parameters from among the candidate parameters, the fourth candidate parameter being a candidate parameter in which a total of matching degrees corresponding to bottom M/N users out of the users in ascending order of matching degrees of the fourth candidate parameter and the preference parameters is less than or equal to a predetermined value.

8. The zone control system according to claim 1,
wherein when a total number of the plurality of zones is N, where N is an integer greater than or equal to 2, and when a total number of the users is M, where M is an integer greater than or equal to N, the control device selects and determines a fourth candidate parameter as one of the operation parameters from among the candidate parameters, the fourth candidate parameter being a candidate parameter in which a total of matching degrees corresponding to bottom M/N users out of the users in ascending order of matching degrees of the fourth candidate parameter and the preference parameters is smallest.

9. The zone control system according to claim 7 or 8,
wherein the control device further selects and determines a fifth candidate parameter as another operation parameter out of the operation parameters from among the candidate parameters, the fifth candidate parameter being a candidate parameter in which a total of matching degrees of the fifth candidate parameter and preference parameters corresponding to bottom M/N or less users is greater than or equal to a third threshold, the bottom M/N or less users being bottom M/N or less users out of the users in the ascending order of the matching degrees of the fourth candidate parameter and the preference parameters.

10. The zone control system according to any one of claims 7 to 9,
wherein the control device further selects and determines a fifth candidate parameter as another operation parameter out of the operation parameters from among the candidate parameters, the fifth candidate parameter being a candidate parameter in which a total of matching degrees corresponding to bottom M/N users out of rest of the users in ascending order of matching degrees of the fifth candidate parameter and preference parameters corresponding to the rest of the users is less than or equal to a fourth threshold, the rest of the users being users other than bottom M/N or less users out of the users in the ascending order of the matching degrees of the fourth candidate parameter and the preference parameters.

11. The zone control system according to claim 7 or 8,
wherein the control device further selects and determines a sixth candidate parameter as another operation parameter out of the operation parameters from among the candidate parameters, the sixth candidate parameter being a candidate parameter in which a total of matching degrees corresponding to bottom M/N users out of rest of the users in ascending order of matching degrees of the sixth candidate parameter and preference parameters corresponding to the rest of the users is smallest, the rest of the users being users other than bottom M/N or less users out of the users in the ascending order of the matching degrees of the fourth candidate parameter and the preference parameters.

12. The zone control system according to any one of claims 1 to 11,
wherein each of the candidate parameters includes a first value corresponding to a first factor of a spatial environment and a second value corresponding to a second factor of the spatial environment,
each of the preference parameters corresponding to the users includes a third value corresponding to the first factor of the spatial environment and a fourth value corresponding to the second factor of the spatial environment, and
the control device calculates a matching degree of the candidate parameter and the preference parameter, by adding a product of the first value and the third value and a product of the second value and the fourth value.

13. The zone control system according to claim 12,
wherein the control device
further determines a correction coefficient according to a period in which the matching degree of the candidate parameter and the preference parameter is calculated, the correction coefficient including a first coefficient corresponding to the first factor of the spatial environment and a second coefficient corresponding to the second factor of the spatial environment, and
calculates the matching degree of the candidate parameter and the preference parameter by adding a product of the first coefficient, the first value, and the third value and a product of the second coefficient, the second value, and the fourth value.

14. The zone control system according to any one of claims 1 to 13,
wherein the control device further identifies a specific candidate parameter that is a candidate parameter determined as an operation parameter corresponding to a zone previously used by a specific user, and
when the control device calculates matching degrees of each of the candidate parameters and a preference parameter corresponding to the specific user, a matching degree of the specific candidate parameter and the preference parameter corresponding to the specific user is calculated higher than a matching degree of another candidate parameter and the preference parameter corresponding to the specific user.

15. The control device according to any one of claims 1 to 14.

16. A control method for operating one or more environment control devices that individually control respective spatial environments of a plurality of zones of a space, the control method comprising:
determining operation parameters for the one or more environment control devices, the operation parameters each corresponding to a different one of the plurality of zones; and
operating the one or more environment control devices according to the operation parameters,
wherein in the determining of the operation parameters,
matching degrees of each of candidate parameters and preference parameters are calculated, the candidate parameters being candidates for the operation parameters, the preference parameters corresponding to individual preferences of users of the space, and
the operation parameters for use in equalizing a total number of users in each of the plurality of zones are selected and determined from among the candidate parameters according to the matching degrees.

17. A program for causing a computer to execute the control method according to claim 16.
